# EUROPEAN PATENT SPECIFICATION

(11) **EP 1 375 631 B1**
(45) Date of publication and mention of the grant of the patent: **09.03.2011**
(21) Application number: 02713174.7
(22) Date of filing: 20.03.2002
(51) Int. Cl.: C10L 10/04, C10L 1/00, C10L 1/12, F23J 7/00, F23K 5/08

(54) **FUEL ADDITIVE FOR PREVENTING SLAGGING AND METHOD FOR BURNING FUEL**
BRENNSTOFFADDITIV ZUR VERHINDERUNG VON VERSCHLACKUNG UND VERFAHREN ZUM VERBRENNEN VON BRENNSTOFF
ADDITIF ANTI-SCORIFICATION POUR COMBUSTIBLE, ET PROC D DE COMBUSTION DE COMBUSTIBLE

(30) Priority: 23.03.2001 JP 2001084134
(43) Date of publication of application: 02.01.2004
(73) Proprietor: Taihokohzai Co., Ltd., Shibaura 4-2-8, Minato-ku Tokyo (JP)
(72) Inventor: SHOUJI, Masaki, Narashino-shi, Chiba 275-0022 (JP); ONOZAWA, Teruo, Naka-gun, Kanagawa 275-0005 (JP); NAKAI, Shigeru, Ebina-shi, Kanagawa 243-0411 (JP)
(74) Representative: Bradley, Adrian
(86) International application number: PCT/JP2002/002661
(87) International publication number: WO 2002/077132

(56) References cited:
- GB-A- 1 005 957
- GB-A- 1 189 356
- JP-A- 52 151 304
- JP-A- 59 132 927
- JP-A- 61 152 794
- JP-A- 61 250 416
- JP-A- 62 077 508
- JP-A- 62 167 391
- JP-A- 62 167 393
- US-A- 3 343 908

## Description

### Technical Field:

This invention relates to an anti-slagging fuel additive which is capable of preventing slagging, a phenomenon caused by the ash in a fuel of such a large ash content as is found in various kinds of fuel represented by coal and oil coke while the fuel is in process of combustion and to a method for combustion of such a fuel.

### Background Art:

Boilers, recovery boilers and various types of heating furnaces that use coal, oil coke or by-produced oil as a fuel and various types of incinerators that dispose of various kinds of waste and wasted tires by combustion are known to be liable to produce clinkers ascribable to the ash in the fuel or the waste and, in consequence of the growth of such clinkers, induce slagging (phenomenon of blocking).

With the object of preventing obstacles of this sort, the practice of adopting such measures as widening intervals between adjacent water pipes of boilers and furnishing such boilers with numerous soot blows has been in vogue. In spite of these efforts, adverse factors, such as the deterioration of fuel, variation of combustion and variation of load, have possibly resulted in limiting the duration of continuous operation of such boilers to the neighborhood of one month, depending on the ash content of the fuel and the melting point of the formed ash. Since these boilers are fated to incur the slagging eventually, they have required the work of suspending the operation, cooling the furnace interior, and peeling and discarding clinkers.

To cope with these obstacles, there have heretofore been tested attempts to repress the slagging by adding into a given fuel or injecting into a combustion gas such fuel additives as are formed by dispersing in water or oil an alkaline earth metal compound, such as magnesium hydroxide, magnesium acetate, calcium hydroxide, calcium carbonate or dolomite, or an iron compound represented by the formula, mFeOₙFe₂Oₛ (wherein m and n denote numerals other than 0), as described in JP-A SHO 61-250416 and JP-A SHO 62-77508.

The conventional fuel additives mentioned above manifest an effective function on fuels that have a relatively small ash content. Specifically, they are capable of preventing the slagging by altering the quality of the ash adhering to a water pipe in consequence of elevating the melting point of the ash, softening the ash and imparting a black color to the ash.

In the case of a fuel having a large ash content as typically found in coal and a fuel yielding a combustion ash of a particularly low melting point as found in Prima coal, for example, the ash deposited on the water pipe in consequence of the combustion of the fuel is in a copious amount. The ash occasionally adheres fast as giant clinkers to a water pipe or to the wall of the water pipe and further tend to encourage growth of giant clinkers by absorbing drifting ash particles, with the result that the slagging will no longer be repressed easily even when the conventional fuel additive is added in a generously increased amount.

The patent specification GB-A-1 005 957 discloses an oil dispersible but non oil-soluble complex of a hydrated metal oxide and a fatty acid, and a process for making the same, wherein the metal oxide and the fatty acid are linked through a basic cation. The complex containing this colloidal metal oxide is used as a fuel additive, particularly for residual fuel oils. Also discussed are the metallic salts of fatty acids called metal soaps, which are characteristically insoluble in water but soluble in oil.

US-A-3 343 908 discloses a process comprising introducing a fine distribution of a basic material and a finely divided acidic oxide material selected from a group comprising *inter alia* silicon dioxide, the mixture having a surface area of at least 30 m²/g, into combustion gases. The said process is designed to remove sulfur trioxide from the combustion gases. Also discussed are previous unsuccessful attempts to bind the sulfur trioxide impurities with magnesium oxide or compounds such as dolomite in order to reduce their occurrence in exhaust gases.

GB-A-1 189 356 discloses a fuel additive which may be provided as a dispersion of active constituents in an oil phase or as an aqueous emulsion of those constituents. One of the constituents may be colloidal silica. Very small quantities of the colloidal silica additive are added to the main component (comprising aluminium, magnesium, manganese and iron), and this may be used in a fuel composition in order to reform/rectify slag formation. Very small amounts of the colloidal silica are added with respect to the main components. Also discussed is the ultimately uneconomical or unsuccessful addition of massive dosages of materials such as the oxides, hydroxides, carbonates and other salts of certain metals as well as clays such as dolomite, talc and magnesia to the fuel in order to improve the slag forming characteristics.

To date, a means to prevent effectively the slagging that occurs during the combustion of a fuel having a large ash-content has never been discovered. This invention is directed toward providing a fuel additive which is capable of effectively preventing the slagging that occurs during the combustion of a fuel having a large ash-content or a fuel yielding a combustion ash of a low melting point as described above and a method for the combustion of fuel.

### Disclosure of the Invention:

The anti-slagging fuel additive according this invention is formed of a composition which is obtained by dispersing in water and/or oil one or more silica compounds, invariably of the form of ultrafine particles having a particle diameter in the range of 3 to 200 nm. The term "particle diameter" mentioned above means an average primary particle diameter which will be referred to briefly as "particle diameter."

The fuel additive further contains an alkali metal (R = Na or K) compound

The fuel additive can comprise 15 to 50 wt % of silica compounds, not more than 2 wt. % of an alkali metal compound as reduced to the R₂O concentration, not more than 12 wt % of a surfactant and the balance of water and/or oil

The fuel additive can further contain 1 to 10 wt. % of at least one member selected from the group consisting of magnesium compounds, iron compounds and calcium compounds.

The fuel additive can further contain a composition obtained by dispersing in oil one or more compounds selected from the group consisting of FeO·nFe₂Oₛ (wherein n denotes a numeral other than 0), Mg(OH)₂ and CaCO₃ invariably of the form of fine particles having undergone an adsorption treatment with one or more acids selected from among naphthenic acid, isostearic acid and C₁₂ to C₂₂ unsaturated fatty acids and measuring 5 to 50 nm in particle diameter and/or a composition obtained by dispersing in water through the aid of a water-soluble surfactant the same compounds in a proportion of not more than 15 wt. % as reduced to the oxide (Fe₂O₃, MgO, CaO) concentration.

The method for the combustion of a fuel according to this invention comprises a step of subjecting a liquid fuel oil or a solid fuel incorporating therein the fuel addition to combustion,

In the method for the combustion of a fuel, the fuel additive is incorporated or added in the mode of short-time intermittent bulk introduction in the quantity in the range of 5 to 50 wt. %, based on the quantity of drifting scales emanating during the process of combustion from the ash contained in the liquid fuel oil or solid fuel during the process of introduction of the fuel additive, on the time schedule of one to three times daily each using a brief period in the range of 0.5 to 2 hours. As a result, the obstacles caused by the ash in the fuel can be effectively prevented.

The present inventors have discovered that by aiding the combustion of a liquid fuel oil or a solid fuel through the use of a fuel additive of a specific composition having a very minute particle diameter, it is made possible to lower the strength of the formed ash and enable this ash to be readily raked off as with a soot flow.

Owing to this aid to the combustion coupled with the method for combustion resorting to such concentrated short-time bulk addition as has never been materialized to date, they have succeeded in preventing obstacles, such as the slagging which occurs during the combustion of a fuel having a large ash content as found in coal or a fuel containing an ash having a low melting point.

As a result, it has been made possible to separate and shed easily the ash adhering fast to a water pipe and giant clinkers as with a soot blow, enhance the yield of thermal absorption by a heat transfer surface, allay high-temperature corrosion and low-temperature corrosion, repress the formation of unburnt carbon, SOₛ and NOₓ, and enable the boiler to continue a stable operation for a long time.

### Brief Description of the Drawings:

Fig. 1 is an artist's concept of one of colloidal silica particles dispersed in a liquid when silica sol is used as a fuel additive.
Fig. 2 is an artist's concept of the colloidal silica particle of Fig. 1 after partial adhesion of an alkali metal thereto.
Fig. 3 is a schematic diagram of a combustion apparatus used in the test for combustion in Example 2.

### Best Mode of Embodying the Invention:

The fuel additive of this invention is a composition which has dispersed in a stable state in water and/or oil one or more compounds selected from the group consisting of aluminum compounds, silica compounds, titanium compounds and zirconium compounds invariably of the form of ultrafine particles having a particle diameter in the range of 3 to 200 nm. Such compounds particularly dispersed (nearly solved) in water are commercially available respectively as alumina sol, silica sol, titania sol and zirconia sol. Preferably, the ultrafine particles have a diameter in the range of 10 to 100 nm. When the compound has a particle diameter larger than the upper limit of the first mentioned range, it is incapable of producing a fully satisfactory anti-slagging effect.

The ultrafine particles, owing to the minuteness of diameter, can be easily dispersed in a stable state even in oil. As concrete examples of the oil which can be used for this dispersion, aliphatic and aromatic hydrocarbons, such as lamp oil, light oil, heavy oil of grade A and methyl naphthalene, may be cited.

Further, the fuel additive of this invention can comprises the aforementioned composition containing not more than 2 wt. % of an alkali metal (R = Na or K) compound as reduced to the R₂O concentration and, consequently, can contribute to the enhancement of the adhesiveness of the sol component to a water pipe or the wall of the shell of water pipes and to the impartation of high porosity to the scales.

The commercially available sols contain an alkali metal compound in minute quantities as an impurity. Synthetic colloidal silica, for example, generally contains 0.05 to 0.7 wt. % of Na₂O and a minute quantity of not more than 0.1 wt. % of K₂O, relative to 20 to 50 wt. % of SiO₂.

When the fuel additive is an emulsion in water or water-oil (W/O type and O/W type), it is allowed to incorporate therein as an alkali metal, besides the impurity in the sol, a minute quantity of water glass, such as sodium silicate or potassium silicate, or a water-soluble substance, such as sodium hydroxide, potassium hydroxide or a carbonate compound.

When the fuel additive is an oil type substance, it is allowed to incorporate therein a minute quantity of an oil-soluble alkali metal salt, such as petroleum sodium sulfonate, sodium naphthalate, or potassium octylate.

The fuel additive of this invention has dispersed in water and/or oil in a stable state one or more , silica compounds, invariably of the form of ultrafine particles at a ratio in the range of 15 to 50 wt. %, further therein not more than 2 wt. % of an alkali metal (R = Na or K) as reduced to the R₂O concentration. Optionally, for the purpose of enhancing the emulsive miscibility with a fuel oil or the wettability on a solid fuel, the fuel addition may incorporate therein not more than 12 wt. % of a surfactant so as to exalt the stability of dispersion.

As concrete examples of the surfactant usable for this incorporation, anionic surfactants, such as alkyl allyl sulfonates, alkyl sulfuric esters, polyoxyethylene alkyl ether acetates, dialkyl sulfosuccinates, polyoxyethylene alkyl sulfuric esters and polyoxyethylene alkyl phosphoric esters; and nonionic surfactants, such as polyoxyethylene alkylphenol ethers, polyoxyethylene fatty acid esters, polyoxyethylene alcohol ethers, polyoxyethylene sorbitan fatty acid esters, polyoxyethylene sorbitol fatty acid esters, higher fatty acid glycerin esters, polyoxyethylene alkyl amines and alkylol amides may be cited.

Further, the fuel additive of this invention is enabled by the incorporation therein of 1 to 10 wt. % of a magnesium compound, an iron compound or a calcium compound, for example, to prevent or repress various obstacles to combustion. These compounds do not need to be particularly restricted. The magnesium compound, for example, may be a water-soluble magnesium compound, such as magnesium nitrate or magnesium acetate. Though magnesium hydroxide generally has a particle diameter of not more than 10 µm, it is preferred for the purpose of this incorporation to be used in the form of ultrafine particles 3 to 200 nm in diameter like the aluminum compounds, silica compounds, titanium compounds and zirconium compounds. The fuel additive may further incorporate therein an organic or inorganic thickener, such as methyl cellulose, carboxymethyl cellulose, bentonite or sepiolite. Particularly when a magnesium compound, an iron compound or a calcium compound having a large diameter is used, it is effective in preventing coarse particles from sedimenting.

The fuel additive of this invention, by the incorporation therein of a composition obtained by dispersing in oil and/or water one or more compounds selected from the group consisting of FeO · nFe₂O₃ (wherein n denotes a numeral other than 0), Mg(OH)₂ and CaCO₃ invariably of the form of fine particles having undergone an adsorption treatment with one or more acids selected from among naphthenic acid, isostearic acid and C₁₂ to C₂₂ unsaturated or saturated fatty acids and measuring 5 to 50 nm in particle diameter in a proportion of not more than 15 wt. % as reduced to the oxide (Fe₂O₃, MgO, CaO) concentration, is enabled to prevent or repress various obstacles to combustion.

When the fine particles which have undergone the adsorption surface treatment and are used for the incorporation are particularly those of iron oxide, they impart a black color to the scales formed in the furnace, exalt thermal absorption, consequently repress the rise of the temperature of the gas, and enable the operation of a boiler to continue in a stable state for a long time.

When the fine particles that have undergone the adsorption surface treatment are dispersed in the fuel additive, it is permissible to use a water-soluble surfactant as a dispersing agent. As concrete examples of the water-soluble surfactant, alkylbenzene sodium sulfonates, sodium alkylsulfate, polyoxyethylene sodium alkylsulfate and sodium salts of fatty acids of C₁₂ to C₂₂ may be cited.

Now, the operation of the fuel additive of this invention will be described below with reference to the application thereof to aqueous silica sol, for example.

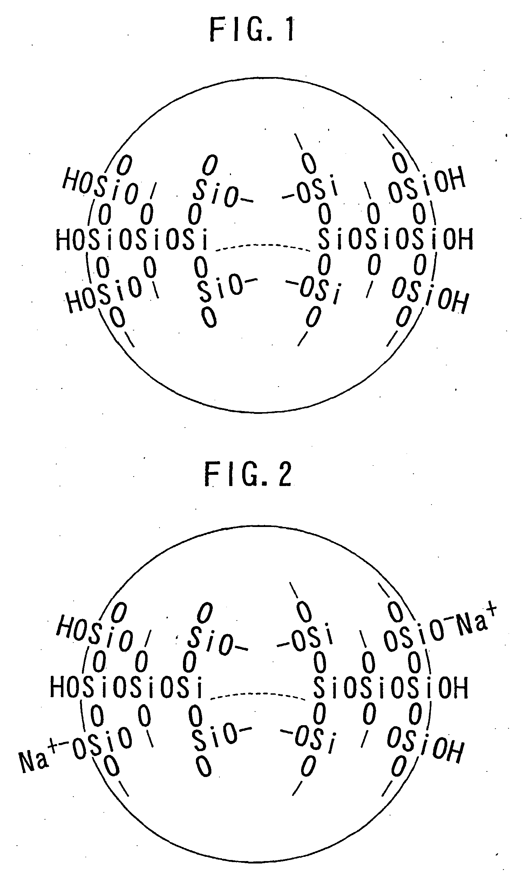

Silica sol is a colloidal silica solution having ultrafine particles of a high molecular silicate anhydride dispersed in water. Fig. 1 is an artist's concept of one of such colloidal silica particles dispersed in the solution.

These colloidal silica particles are amorphous nearly true spheres and are dispersed in water semipermanently in a very stable state. When such a silica sol as this is added concentrically into a combustion furnace, it is converted in consequence of the evaporation of the water component thereof into very minute spherical silica particles and aggregates of spherical silica particles. The aggregates are also in a spherical form. Part of the aggregates adhere to the walls of the water pipes and form a spherical dense and slippery thin film having a mold-releasing property and other part of the aggregates adhere to the surfaces of the viscous particles of combustion ash and lower the stickiness of the ash.

In this case, by adding an alkali metal in a minute quantity to silica formed of ultrafine spherical particles, the silica that inherently has a high melting point and a low adhesive property can be efficiently deposited to water pipes and the wall of a water pipe furnace. Other part of the silica is capable of efficiently adhering to and coating the surface of the viscous particles of the combustion ash and consequently lowering the viscousness of drifting ash. The alkali metal has to be interspersed in a minute quantity on the surface of spherical silica particles or on the surface of aggregates of spherical silica particles to enhance the adhesive property of the silica. If the alkali metal is present in an excess quantity, the excess will enhance the viscousness of silica particles too much and inevitably lower the melting point of the deposited ash. The preferred R₂O concentration, therefore, is in the range of 0.1 to 1 wt. %. Fig. 2 is an artist's concept of one silica particle having an alkali metal partly deposited thereon.

The spherical silica particles added in a large quantity all at once are capable of penetrating the pores of the deposited ash and embrittling the deposited ash wholly. As this embrittlement advances, the action of the spherical silica to enhance the slipperiness that is called the microbearing effect enables clinkers to be pulverized.

Further, these silica particles undergo crystallization from an amorphous to a crystalline structure at a temperature of about 1200°C. In this while, since the water molecules entrapped in a minute quantity in the silica sol particles and the aggregates of silica particles and the hydroxyl groups existing outside these particles are abruptly gasified or otherwise transformed, the spherical silica particles and aggregates thereof are expanded till formation of a porous texture and eventually become susceptible of fracture as a whole.

Owing to the effects of these actions manifested either singly or in a combined form, the clinkers are easily peeled from the wall surface and the surface of a water pipe by means of a soot blow, for example.

These silica particles are in the form of ultrafine particles having a primary particle diameter in the range of 3 to 200 nm mentioned above. The fact that the silica particles, on acquiring a diameter larger than the upper limit of this range, are no longer able to bring a fully satisfactory effect of preventing slagging has been already described. When quartz particles have a large particle diameter of several µm, they betray a large particle diameter distribution and suffer from irregularity of shape among individual particles because they are manufactured by crushing crystalline quartz. When they are added concentrically into the combustion furnace, the water contained therein easily and quickly terminates evaporation because they have a large particle diameter and a wide size distribution and they are irregular in shape. As a result, the silica particles are simply turned into aggregates of silica particles without being transformed into spheres. It is inferred that since these aggregates are incapable of inducing expansion in spite of deficiency in strength, they assume no porous texture, manifest an effect of barely diluting scales, and fall short of preventing slagging.

The use of the fuel additive of this invention may be accomplished by continuously adding the fuel additive in conjunction with a given fuel. In the case of a liquid fuel, it may be forcibly injected into a fuel piping or proportionally injected into a service tank. When the fuel additive is to be added to a solid fuel, particularly to coal, the fuel additive can be efficiently vacuum-deposited on the surface of clinkers by adding the fuel additive directly to a coal-feeding device or to the coal on a coal-feeding device belt, crushing and kneading the fuel additive and the coal with a coal-crushing device (mill), thereby inducing adhesion of the fuel additive to the surface of the fine coal particles, and subjecting the produced blend to combustion.

Then by contriving a method for effecting its addition specifically, the fuel additive is enabled to manifest its effect more copiously and allow a reduction in the quantity of consumption. This method of addition consists in short-time intermittent bulk addition of the fuel additive in a quantity in the range of 5 to 50 wt. % based on the quantity of drifting scales (ash) produced in the process of combustion from the ash contained in the fuel during the introduction of the fuel additive, on the time schedule of one to three times daily each using a brief period in the range of 0.5 to 2 hours. By this method of addition, the effect of preventing slagging can be markedly improved.

Also in the case of the method that comprises continuously adding the fuel additive of this invention in conjunction with a given fuel, the operation of this method is capable of imparting a porous texture to clinkers and consequently lowering the strength thereof. This method, however, suffers the consumption of the fuel additive to increase because the decrease of the strength enough to attain easy exfoliation of the adhering ash cannot be expected unless the fuel additive is added in a large quantity.

In the case of the intermittent bulk addition implemented as described above, the ash of satisfactorily low strength is deposited in layers during the addition of the fuel additive and the ash of high strength is deposited in layers thereon during the suspension of this addition. Even when the deposit of the ash grows to a certain thickness, since the layer of the ash of low strength is peeled under the weight of the ash itself and by a soot blow, it can be shed in tandem with the layer of the ash of high strength. Since this method effects bulk addition concentrically in separated brief durations, the total quantity of consumption is smaller than when the addition is made continuously. This method, therefore, can manifest a larger effect with a smaller quantity of consumption.

Now, this invention will be described below with reference to working examples. It should be noted, however, that this invention is not limited to the following working examples.

### Example 1 (Basic test):

### 1. Ash used for test (clinkers)

The clinkers formed during the combustion of Prima coal in a finely divided coal boiler were finely pulverized and the portion of the produced fine powder that passed a 200-mesh sieve was used for the test.

### 1-1. Property of Prima coal

| | |
|---|---|
| Inherent moisture | 6.2% |
| Ash content | 4.2% |
| Volatile component | 40.4% |
| Fixed carbon | 49.2% |

### 1-2. Composition of clinkers (ash)

| | |
|---|---|
| SiO₂ | 54.4% |
| Fe₂O₃ | 11.3% |
| Al₂O₃ | 20.2% |
| CaO | 2.9% |
| MgO | 3.6% |
| Na₂O | 0.6% |
| K₂O | 1.9% |
| SO₃ | 3.9% |
| Others | 1.2% |

### 2. Testing method

Sample ashes pulverized to a size of not more than 200 meshes and the additive composition (shown in 3. below) added as a solid component thereto respectively in proportions of 5% and 10% were mixed thoroughly by stirring to obtain homogenous compositions, which were molded into cylinders 10 mm in diameter and 15 mm in height by the use of a molding device and were dried at 100°C for 24 hours.

The produced specimens were each heated under a high-temperature heating microscope at a temperature-increasing rate of 20°C/min. and visually tested for softening point, melting point and expansion coefficient. After this test, they were measured for crushing strength.

### 3. Additive used for test

### Formulation 1 (Comparative)

Silica sol having a particle diameter in the range of 10 to 20 nm (40% as reduced to SiO₂ concentration)

### Formulation 2 (Comparative)

Alumina sol having a particle diameter in the range of 10 to 20 nm (20% as reduced to Al₂O₃ concentration)

### Formulation 3 (Comparative)

Lamp oil slurry of ultrafine titania particles having a particle diameter in the range of 10 to 20 nm (10% as reduced to TiO₂ concentration)

### Formulation 4 (Comparative)

Mixture of silica sol and zirconia sol having a particle diameter in the range of 10 to 20 nm (35% as reduced to SiO₂ concentration and 10% as reduced to ZrO₂ concentration)

### Formulation 5

Silica sol having a particle diameter in the range of 10 to 20 nm (40% as reduced to SiO₂ concentration, Na₂O = 0.6%)

### Formulation 6 (Comparative)

Aqueous solution having 0.12% of KOH dissolved in alumina sol having a particle diameter in the range of 10 to 20 nm (20% as reduced to Al₂O₃ concentration, K₂O = 0.10%)

### Formulation 7 (Comparative)

Lamp oil slurry of ultrafine titania particles having a particle diameter in the range of 20 to 50 nm (25% as reduced to TiO₂ concentration, Na₂O = 0.5%)

### Formulations 8 (Comparative)

Solution having 0.3% of water glass No. 1 dissolved in a mixture of silica sol and zirconia sol having a particle diameter in the range of 20 to 60 nm (35% as reduced to SiO₂ concentration, 10% as reduced to ZrO₂ concentration, Na₂O = 0.5%, H₂O = 0.03%)

### Formulation 9

Mixture of silica sol having a particle diameter in the range of 20 to 40 nm and aqueous dispersion of FeO · nFe₂O₃ (n = 1) which had undergone adsorption treatment with oleic acid and consequently acquired a particle diameter in the range of 10 to 15 nm, the dispersion resorting to a water-soluble surfactant (20% as reduced to SiO₂ concentration, 10% as reduced to Fe₂O₃ concentration, and 0.2% as reduced to Na₂O concentration)

### Comparative formulation 1

Aqueous slurry of silica having a particle diameter in the range of 1 to 5 µm (40% as reduced to SiO₂ concentration)

### Comparative formulation 2

Aqueous slurry of alumina having a particle diameter in the range of 1 to 5 µm (30% as reduced to Al₂O₃ concentration)

### Comparative formulation 3

Aqueous slurry of magnesium hydroxide having a particle diameter in the range of 1 to 5 µm (40% as reduced to Mg(OH)₂ concentration)

### Comparative formulation 4

Aqueous slurry of calcium hydroxide having a particle diameter in the range of 1 to 5 µm (35% as reduced to Ca(OH)₂ concentration)
Blank
No addition

4. The results of test of Formulations 1 to 9 and Comparative formulations 1 to 4 are shown in Table 1.

5. Test results

**Table 1**

| | | Test Item | | | |
|---|---|---|---|---|---|
| Formulation | Quantity of Addition (%) | Softening point (°C) | Melting Point (°C) | Expansion Coefficient (%) *1) | Crushing Strength (kg) *2) |
| Formulation 1 | 5 | 1240 | 1280 | 140 | 10.7 |
| | 10 | 1300 | 1330 | 185 | 3.9 |
| Formulation 2 | 5 | 1250 | 1300 | 115 | 11.6 |
| | 10 | 1310 | 1350 | 149 | 4.7 |
| Formulation 3 | 5 | 1250 | 1320 | 113 | 12.1 |
| | 10 | 1220 | 1370 | 147 | 4.5 |
| Formulation 4 | 5 | 1260 | 1320 | 133 | 11.0 |
| | 10 | 1250 | 1320 | 113 | 12.1 |
| Formulation 5 | 5 | 1240 | 1290 | 140 | 10.0 |
| | 10 | 1310 | 1330 | 187 | 3.7 |
| Formulation 6 | 5 | 1250 | 1300 | 115 | 11.6 |
| | 10 | 1315 | 1360 | 150 | 4.8 |
| Formulation 7 | 5 | 1250 | 1320 | 113 | 12.0 |
| | 10 | 1325 | 1370 | 148 | 4.5 |
| Formulation 8 | 5 | 1260 | 1325 | 130 | 10.7 |
| | 10 | 1335 | 1390 | 179 | 4.0 |
| Formulation 9 | 5 | 1250 | 1310 | 125 | 11.0 |
| | 10 | 1300 | 1340 | 165 | 4.2 |
| Comparative Formulation 1 | 5 | 1230 | 1240 | 105 | 16.2 |
| | 10 | 1240 | 1250 | 109 | 14.2 |
| Comparative Formulation 2 | 5 | 1240 | 1250 | 106 | 15.0 |
| | 10 | 1250 | 1260 | 111 | 14.1 |
| Comparative Formulation 3 | 5 | 1200 | 1210 | 101 | 17.1 |
| | 10 | 1160 | 1170 | 102 | 17.8 |
| Comparative Formulation 4 | 5 | 1190 | 1200 | 103 | 16.9 |
| | 10 | 1160 | 1190 | 103 | 18.3 |
| Blank | 0 | 1210 | 1250 | 103 | 19.3 |

| | | | | | |
|---|---|---|---|---|---|
| *1) The thermal expansion coefficient represents the volume of a given test specimen in a state heated to 1000°C based on the volume of the test specimen prior to the start of temperature elevation taken as 100%. *2) The crushing strength of a given test specimen was obtained after the test specimen had undergone the measurement of melting point by subjecting it to a test for hardness by the use of a Kiya type digital hardness meter (Model KHT-20). | | | | | |

### 6. Discussion

1. The formulations 1 to 9 according to this invention showed marked rises in softening point and melting point, particularly conspicuously in the test specimens having additions in large quantities, as compared with the comparative formulations 1 to 4 and the blank.
2. They similarly showed large expansion coefficients and excelled the comparative formulations 1 to 4 and the blank in terms of the property of expansion. Particularly, the test specimens of the formulations 1 to 9 which had additions in large quantities showed rises of expansion coefficient to 1.5 to 1.9 times those of no addition, registering very large magnitudes.
3. The formulations 1 to 9 showed very small magnitudes of crushing strength as compared with the comparative formulations 1 to 4 and the blank.
4. The fact that the expansion coefficients were large and that crushing strengths of ash were small indicates that the ashes of the formulations 1 to 9 were porous and susceptible of fracture.

### Example 2 (Test with real device)

### 1. Specifications of boiler

Model: Single barrel type finely divided coal boiler made by Mitsubishi Heavy Industries, Ltd.
Quantity of evaporation: 350 T/H
Working pressure: 13.7 MPA
Quantity of coal consumed: 800 tons/day
Mode of draft: Balanced draft
Mill (coal crusher): Three units (roller mill)

### 2. Schematic diagram of real device

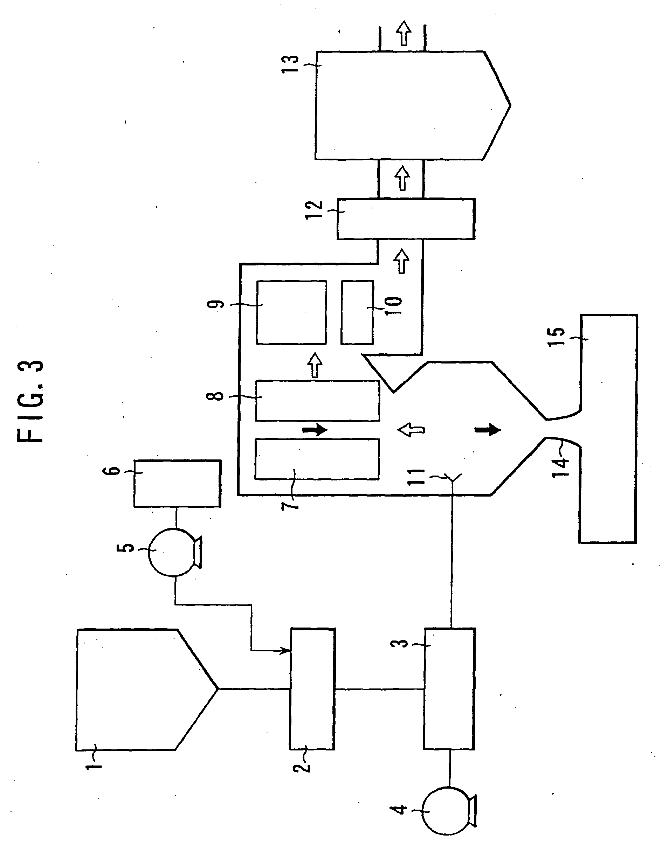

The combustion device used in the test is illustrated in Fig. 3.

In the diagram, 1 stands for a coal bunker, 2 for a coal feeder, 3 for a mill (crusher), 4 for a conveying blower, 5 for a chemical injection pump, 6 for an additive tank, 7 for a secondary superheater, 8 for a tertiary superheater, 9 for a primary superheater, 10 for an economizer, 11 for a burner, 12 for an air heater, 13 for an EP (electric dust collector), 14 for a water seal port, and 15 for a water tank for receiving removed ash. The blank arrow marks show the flow of exhaust gas and the filled arrow marks show the ash dropped by a soot blow, for example.

### 3. Testing method

### 3-1. Outlines

The real device used herein was a mono-fuel combustion boiler designed exclusively for Prima coal. The test period was fixed at one month because the boiler in a blank test was found to form giant clinkers in the lower zone of the furnace wall burner by a visual inspection through a peeling hole after about one month of operation.

### 3-2. Sample additives used for the test

The additives of formulations 1 and 5 and comparative formulation 1 in Example 1 were used.

### 3-3. Site of introduction of sample additive

The addition of a given sample additive was made to the coal on the coal feeding device belt preceding the mill.

### 3-4. Method of addition of additive

The additive of each of the formulations 1 and 5 was added by intermittent injection in a quantity containing the active component (SiO₂) at a ratio of 10% based on the ash content of the coal on the time schedule of twice daily each using two hours.

The additive of comparative formulation 1 was continuously introduced at a rate of 1/1000 of the quantity of the sample coal during the former half (half a month) of the test period.

### 4. Particulars of test

4-1. Material for test: Bottom clinkers scooped up through the ash-removing tank beneath the water seal port.
4-2. Items of test: Weight, crushing strength and apparent specific gravity
4-3. Intervals of measurement: Once per three days
5. The test results are shown in Table 2.
5-1. Changes in weight of bottom clinkers (tons/3 days)

**Table 2**

| | Formulation 1 | Formulation 5 | Comparative Formulation 1 |
|---|---|---|---|
| 1 | 9.9 | 10.0 | 10.1 |
| 2 | 10.5 | 10.3 | 10.3 |
| 3 | 10.6 | 10.4 | 9.7 |
| 4 | 9.9 | 10.0 | 9.5 |
| 5 | 10.1 | 10.2 | 8.9 |
| 6 | 10.3 | 10.3 | 8.6 |
| 7 | 9.7 | 9.9 | 8.5 |
| 8 | 9.9 | 9.8 | 7.6 |
| 9 | 10.2 | 10.2 | 7.4 |
| 10 | 10.0 | 10.2 | 6.7 |
| Average | 10.11 | 10.13 | 8.73 |

Generally about 10% of the coal ash was recovered as clinkers. In the test run using the additive of Formulation 1, the quantity of recovered clinkers remained substantially at a fixed level for one month. In the test run using the additive of Comparative Formulation 1, the quantity began to decline gradually on the ninth day of the test or so (during the third measurement) and suddenly declined in the latter half of the test period.

Formulations 1 and 5 and comparative formulation 1 produced a difference in the range of 13.8 to 14.0 tons [= {(10.11 to 10.13) - 8.73} × 10]. In the visual inspection, comparative formulation 1 was found to form a pile of giant clinkers above the water seal port of the fire furnace. After the boiler was stopped, the clinkers were peeled and shed and then weighed. The weight was found to be about 15 tons, a magnitude coinciding with the weight difference of bottom clinkers.

5-2. The results of the measurement for the crushing strength and the apparent specific gravity of the bottom clinkers are shown in Table 3.

**Table 3**

| | Formulation 1 | | Formulation 5 | | Comparative Formulation 1 | |
|---|---|---|---|---|---|---|
| | Crushing Strength (kg) | Apparent Specific Gravity | Crushing Strength (kg) | Apparent Specific Gravity | Crushing Strength (kg) | Apparent Specific Gravity |
| 1 | 4.9 | 1.19 | 4.9 | 1.19 | 16.4 | 2.25 |
| 2 | 5.1 | 1.23 | 5.0 | 1.22 | 15.9 | 2.23 |
| 3 | 5.2 | 1.10 | 5.2 | 1.11 | 17.1 | 2.19 |
| 4 | 6.0 | 1.16 | 6.0 | 1.15 | 16.6 | 2.21 |
| 5 | 4.8 | 1.20 | 4.7 | 1.20 | 15.4 | 2.30 |
| 6 | 4.5 | 1.20 | 4.5 | 1.20 | 16.6 | 2.29 |
| 7 | 4.9 | 1.18 | 4.7 | 1.16 | 17.2 | 2.27 |
| 3 | 5.0 | 1.19 | 5.0 | 1.18 | 17.9 | 2.20 |
| 9 | 5.3 | 1.17 | 5.3 | 1.17 | 18.1 | 2.26 |
| 10 | 4.9 | 1.13 | 4.8 | 1.14 | 19.3 | 2.24 |
| Average | 5.06 | 1.18 | 5.0 1 | 1.17 | 17.05 | 2.24 |

The formulations 1 and 5 were found by a calculation using the average results to produce decreases respectively of 47% and 48% in apparent specific gravity as compared with the comparative formulation 1. This fact indicates that the ash of burnt coal increased a void volume, namely acquired a porous texture, and became susceptible of fracture and, therefore, was easily peeled and shed as by means of a soot blow.

Though this invention has been described with reference to working examples, it ought not be limited to the examples cited above but may be embodied liberally without altering the construction thereof set forth in the appended claims.

### Industrial Applicability

The fuel additive of this invention, as described above, is capable of preventing the trouble of slagging caused during the combustion of a fuel of such a large content of an inorganic component (ash) as is found in various kinds of fuel, particularly in a coal-burning boiler, owing to the ash entrained by the fuel by virtue of imparting a porous texture to the clinkers formed of the ash and lowering the crushing strength of the clinkers. Particularly, the fuel additive of this invention, when used in the mode of intermittent bulk addition, is capable of manifesting an enhanced effect while decreasing the quantity of consumption, easily peeling and shedding the deposited ash from the surface of a furnace wall or the water pipes and preventing further deposition of the ash, and further preventing high- or low-temperature corrosion and repressing the formation of unburnt carbon, SO₃ and NOₓ as well.

## Claims

1. An anti-slagging fuel additive comprising silica compounds, invariably of a form of ultrafine particles 3 to 200 nm in particle diameter dispersed in water and/or oil in a stable state **characterised in that** the composition further contains an alkali metal (R = Na or K) compound in a quantity of not more than 2 wt. % as reduced to the R₂O concentration.

2. The anti-slagging fuel additive according to claim 1 wherein the composition comprises 15 to 50 wt. % of silica compounds, , not more than 2 wt. % of an alkali metal (R = Na or K) compound as reduced to the R₂O concentration, not more than 12 wt. % of a surfactant, and the balance of water and/or oil.

3. The anti-slagging fuel additive according to claims 1 or 2, wherein the composition further contains 1 to 10 wt. % of one or more compounds selected from among magnesium compounds, iron compounds and calcium compounds.

4. The anti-slagging fuel additive according to claims 1 or 2 wherein the composition contains a composition obtained by dispersing in oil one or more compounds selected from the group consisting of FeO · nFe₂O₃ (wherein n denotes a numeral other than 0), Mg(OH)₂ and CaCO₃ invariably of a form of fine particles having undergone an adsorption treatment with one or more acids selected from among naphthenic acid, isostearic acid and C₁₂ to C₂₂ unsaturated or saturated fatty acids and measuring 5 to 50 nm in particle diameter and/or a composition obtained by dispersing in water through the aid of a water-soluble surfactant the same compounds in a proportion of not more than 15 wt. % as reduced to the oxide (Fe₂O₃, MgO, CaO) concentration.

5. A method for the combustion of a fuel, comprising a step of subjecting a liquid fuel oil or a solid fuel incorporating therein the fuel additive according to any one of claims 1 to 4 to combustion,

6. The method according to claim 5, wherein the fuel additive is incorporated or added in a mode of short-time intermittent bulk introduction in a quantity in a range of 5 to 50 wt. %, based on a quantity of drifting scales emanating during the process of combustion from ash contained in the liquid fuel oil or solid fuel during the course of introduction of the fuel additive, on a time schedule of one to three times daily each using a period in a range of 0.5 to 2 hours.

## Patentansprüche

1. Ein Anti-Verschlackungs-Kraftstoffadditiv, umfassend Silicaverbindungen, die unveränderlich von einer Form von ultrafeinen Partikeln von 3 bis 200 nm im Partikeldurchmesser in Wasser und/oder Öl in einem stabilen Zustand dispergiert sind, **dadurch gekennzeichnet, dass** die Zusammensetzung weiterhin eine Alkalimetall-(R = Na oder K)-Verbindung in einer wie auf die R₂O-Konzentration reduzierten Menge von nicht mehr als 2 Gew.-% enthält.

2. Das Anti-Verschlackungs-Kraftstoffadditiv gemäß Anspruch 1, wobei die Zusammensetzung aufweist: 15 50 Ges.-% an Silicaverbindungen, nicht mehr als 2 Gew.- % einer Alkalimetall-(R = Na oder K)-Verbindung, wie auf die R₂O-Konzentration reduziert, nicht mehr als 12 Gew.-% eines oberflächenaktiven Stoffs sowie den Ausgleich mit Wasser und/oder Öl.

3. Das Anti-Verschlackungs-Kraftstoffadditiv gemäß Anspruch 1 oder 2, während die Zusammensetzung weiterhin beinhaltet: 1 -10 Ges -% von einer oder mehreren Verbindungen, die ausgewählt sind unter Magnesiumverbindungen, Eisenverbindungen sowie Calciumverbindungen.

4. Das Anti-Verschlackungs-Kraftstoffadditiv gemäß Anspruch 1 oder 2, während die Zusammensetzung beinhaltet: eine Zusammensetzung, die durch Dispergieren in Öl von einer oder mehreren Verbindungen erhalten wird, die ausgewählt sind aus der Gruppe bestehend aus: FeO • nFe₂O₃ (wobei n eine andere Zahl als 0 bedeutet), Mg(OH)₂ sowie CaCO₃, die unveränderlich von einer Form von feinen Pattikeln sind, die eine Adsorptionsbehandlung mit einer oder mehreren Säuren unterlaufen haben, die ausgewählt sind unter Naphthensäure, Isostearinsäure sowie C₁₂ bis C₂₂ ungesättigten oder gesättigten Fettsäuren, und die 5 bis 50 nm im Partikeldurchmesser betragen und/oder eine Zusammensetzung, die mittels Dispergieren in Wasser mit Hilfe einer wasserlöslichen oberflächenaktiven Substanz derselben Verbindungen in einem Verhältnis von nicht mehr als 15 Gew.-% wie reduziert zu der Oxid-(Fe₂O₃, MgO, CaO)-Konzentration erhalten werden.

5. Ein Verfahren für die Verbrennung eines Kraftstoffs, umfassend einen Schritt des Unterziehens eines flüssigen Kraftstofföls oder eines festen Kraftstoffs, die das Kraftstoffadditiv gemäß einem der Ansprüche 1 bis 4 darin aufweisen, einer Verbrennung.

6. Das Verfahren gemäß Anspruch 5, während das Kraftstoffadditiv enthalten ist oder zugesetzt ist in einem Betrieb der Kurzzeitintervall-Hauptteileinleitung in einer Menge in einem Bereich von 5 bis 50 Gew.-%, basierend auf einer Menge von Abweichungsskalen, die während des Verbrennungsprozesses aus der in dem flüssigen Kraftstofföl oder festen Kraftstoff enthaltenen Asche während des Vorgangs der Einleitung des Kraftstoffadditivs hervorgehen, in einem Zeitplan von einem bis dreimal täglich, wobei jede einen Zeitraum in einem Bereich von 0,5 bis 2 Stunden verwendet.

## Revendications

1. Additif anti-scorification pour carburant comprenant des composés de silice, invariablement sous forme de particules ultrafines de 3 à 200 nm de diamètre de particule dispersées dans de l'eau et/ou de l'huile dans un état stable **caractérisé en ce que** la composition contient en outre un composé de métal alcalin (R = Na ou K) dans une quantité non supérieure à 2 % en poids tel que réduit à la concentration en R₂O.

2. Additif anti-scorification pour carburant selon la revendication 1, dans lequel la composition comprend 15 à 50 % en poids de composés de silice, pas plus de 2 % en poids d'un composé de métal alcalin (R = Na ou K) tel que réduit à la concentration en R₂O, pas plus de 12 % en poids d'un agent tensioactif, le reste étant de l'eau et/ou de l'huile.

3. Additif anti-scorification pour carburant selon la revendication 1 ou 2, dans lequel la composition contient en outre 1 à 10 % en poids d'un ou plusieurs composés choisis parmi les composés de magnésium, les composés de fer et les composés de calcium.

4. Additif anti-scorification pour carburant selon la revendication 1 ou 2, dans lequel la composition contient une composition obtenue en dispersant dans de l'huile un ou plusieurs composés choisis dans le groupe consistant en FeO·nFe₂O₃ (où n désigne un nombre autre que 0), Mg(OH)₂ et CaCO₃ invariablement sous la forme de fines particules ayant subi un traitement d'absorption avec un ou plusieurs acides choisis parmi l'acide naphténique, l'acide isostéarique et les acides gras saturés ou insaturés en C₁₂ à C₂₂ et mesurant 5 à 50 nm de diamètre de particule et/ou une composition obtenue en dispersant dans l'eau à l'aide d'un agent tensioactif soluble dans l'eau les mêmes composés dans une proportion non supérieure à 15 % en poids tel que réduit à la concentration en oxyde (Fe₂O₃, MgO, CaO).

5. Procédé de combustion d'un carburant, comprenant une étape consistant à soumettre un mazout liquide ou un carburant solide incorporant l'additif pour carburant selon l'une quelconque des revendications 1 à 4, à une combustion.

6. Procédé selon la revendication 5, dans lequel l'additif pour carburant est incorporé ou ajouté dans un mode d'introduction brut intermittent à temps court dans une plage allant de 5 à 50 % en poids, par rapport à une quantité de battitures accumulées émanant du procédé de combustion de cendres contenues dans le mazout liquide ou le carburant solide au cours de l'introduction de l'additif pour carburant, sur une planification de temps d'une à trois fois par jour utilisant chacune une période dans une plage allant de 0,5 à 2 heures.
